# EUROPEAN PATENT SPECIFICATION

(11) **EP 0 521 849 B1**
(45) Date of publication and mention of the grant of the patent: **17.01.1996**
(21) Application number: 90905985.9
(22) Date of filing: 30.03.1990
(51) Int. Cl.: H01J 7/18, H01J 1/56, B01D 53/28, B01J 20/32, B01D 53/04

(54) **PROCESS AND APPARATUS FOR PURIFYING INERT GASES TO REMOVE LEWIS ACID AND OXIDANT IMPURITIES THEREFROM**
VERFAHREN UND VORRICHTUNG ZUR REINIGUNG VON INERTGASEN DURCH ENTFERNUNG VON LEWISSÄURE UND OXYDIERENDEN VERUNREINIGUNGEN
PROCEDE ET APPAREIL SERVANT A EPURER DES GAS INERTES POUR EN ELIMINER L'ACIDE DE LEWIS ET LES IMPURETES OXYDANTES

(43) Date of publication of application: 13.01.1993
(73) Proprietor: MILLIPORE INVESTMENT HOLDINGS LIMITED, Wilmington, Delaware 19805 (US)
(72) Inventor: TOM, Glenn, M., New Milford, CT 06776 (US); BROWN, Duncan, W., Wilton, CT 06897 (US)
(74) Representative: Schwan, Gerhard, Dipl.-Ing.
(86) International application number: PCT/US90/01700
(87) International publication number: WO 91/15868

(56) References cited:
- EP-A- 0 283 961
- EP-A- 0 283 965
- US-A- 3 240 554
- US-A- 3 361 531
- US-A- 4 101 568
- US-A- 4 604 270
- US-A- 4 659 552
- US-A- 4 668 773
- US-A- 4 797 227

## Description

This invention generally relates to a process, and apparatus for purifying inert gas mixtures to remove Lewis acid and oxidant impurities therefrom.

### Background Art

The provision of the high purity inert gas streams is critically important in a wide variety of industrial and research applications.

An example of such applications is the fabrication of semiconductor devices. A number of inert gases are employed in such fabrication, and these gases as supplied frequently are contaminated with impurities such as Lewis acids and/or oxidants, e.g., oxygen and/or water. Such impurities when present in any significant amounts can render the product semiconductor device deficient or even useless for its intended purpose.

Accordingly, there is a continuing need in the art to develop and deploy improved apparatus, processes, and materials for purifying inert gas streams of such impurities.

The formation of scavengers suitable for purifying aprotic fluids such as aliphatic hydrocarbons, olefins, and gases used in the semiconductor industry, by pyrolyzing Group I metal alkyls on an inorganic support to convert the metal alkyls to their corresponding metal hydrides, is disclosed in "Metal Hydride Scavengers for the Removal of Impurities from Aprotic Fluids", Research Disclosure No. 276105, of Hercules Incorporated, April, 1987. A criterion for the use of such scavengers is that the fluid to be purified be inert to the scavenger. The capacity disclosed for this scavenger, in terms of oxygen impurity removal capacity, is two liters of oxygen per liter of a bed of such scavenger.

U.S. Patents 4,604,270 and 4,603,148 to G. M. Tom disclose scavengers in which alkyl metal compounds are immobilized by coupling them to an organic polymeric support, followed by pyrolysis to yield a dispersed phase of the metal hydride in the organic polymer matrix. According to US-A-4659552, a thermal ageing of 140-250°C can be carried out.

Our copending U.S. patent application Serial No. 07/029,632 filed March 24, 1987 and entitled "Process and Composition for Purifying Arsine, Phosphine, Ammonia, and Inert Gases to Remove Lewis Acid and Oxidant Impurities Therefrom", which corresponds to EP-A-0 283 961, discloses scavenger compositions comprising a support having associated therewith, but not covalently bound thereto, an anion which is reactive with impurities in the gas mixture to remove same. The anion may be a carbanion whose corresponding protonated compound has a pkₐ value of from about 22 to about 36, and/or anions formed by reaction of such carbanions with the primary component of the gas mixture, i.e., carbanions that selectively deprotonate the primary component of the gas mixture, such as arsine, phosphine, or ammonia, to form the corresponding arside, phosphide, or amide anion as the active scavenging species. An illustrative scavenging source compound loaded on the support to form such prior art scavengers is triphenylmethyllithium, which provides a triphenylmethide anion as an active scavenging moiety.

According to EP-A-283 965, gaseous hydrogen halides can be dried by contacting with a scavenger made by depositing butyllithium, dibutylmagnesium or triethylaluminium on acidic alumina, followed by a temperature treatment at 125°C, and conditioning with the hydrogen halide.

H. L. Rhodes, "An Apparatus and Procedure for Calibrating a Water Vapor Analyzer in the 0.1 to 15 ppm Range", Report of Investigations No. 8548, U.S. Department of the Interior, Bureau of Mines (1981), describes a method of detecting small amounts of water in a gas, wherein bulk powdered calcium hydride is reacted with the water vapor at 150°C to form hydrogen gas, which then is analyzed by gas chromatography to determine the original water content of the gas containing same.

The absorption of water and carbon dioxide on bulk lithium hydride is reported in Smyrl, M. R., et al, "Monitoring the Heterogeneous Reaction of LiH and LiOH with H₂O and CO₂ by Diffuse Reflectance Infrared Fourier Transform Spectroscopy", Applied Spectroscopy, 37, pp. 38-44 (1983).

U.S. Patent 2,919,268 to P. Fotis, Jr., et al discloses a composition formed by heating a Group IIA metal and a metal oxide at a 0.15-1.0 weight ratio and a temperature of 500-700°C, to form a catalyst said to be useful in the polymerization of normal alkenes.

U.S. Patent 4,450,099 discloses a synthesis gas catalyst formed by slurrying barium hydroxide with a metal oxide such as barium oxide, alumina, and silica, followed by calcining of the resulting solids at 200-900°C.

It is an object of the present invention to provide an improved scavenger for purification of inert gases to remove Lewis acid and oxidant impurities therefrom, and to provide a method of making the aforementioned catalyst, and a process and apparatus for utilizing same to purify inert gas mixtures, to remove Lewis acid and oxidant impurities therefrom.

### SUMMARY OF THE INVENTION

In one aspect, the present invention relates to a process for producing a scavenger removing Lewis acids and oxidant impurities from inert gas mixtures which is characterized by the features of claim 1.

In another aspect, the present invention relates to a process for purifying an inert gas mixture by removing Lewis acid and oxidant impurities therefrom, which is characterized by the features of claim 10.

A still further aspect of the invention relates to an apparatus for purifying inert gas mixtures by removing Lewis acid and oxidant impurities therefrom, which is characterized by the features of claim 13.

Other embodiments of the invention will be more fully apparent from the ensuing disclosure and appended claims.

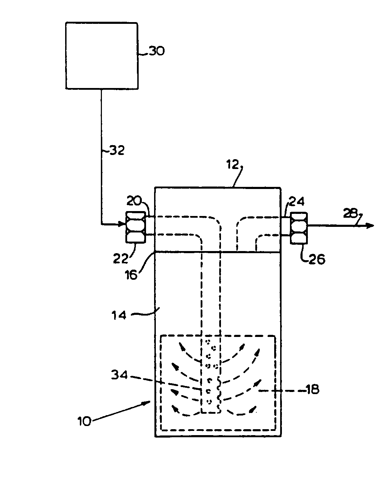

### BRIEF DESCRIPTION OF THE DRAWING

The single drawing is a partially-sectioned, elevation view of an inert gas mixture purification apparatus, according to one embodiment of the present invention.

### DETAILED DESCRIPTION OF THE INVENTION, AND PREFERRED EMBODIMEHTS THEREOF

The present invention is based on the surprising and unexpected discovery of scavenger compositions for purifying inert gas mixtures to remove Lewis acid and oxidant impurities therefrom, which exhibit extremely high Lewis acid and oxidant impurity-removal capacity, as compared to various scavenger and gas sorption compositions of the prior art described in the "Background" section hereof.

As used herein, the term "inert gases" refers to gases that are substantially non-reactive with the active scavenging moieties of scavengers according to the present invention. The term "inert gas mixtures" refers to mixtures of inert gases with Lewis acid and/or oxidant impurities.

The inert gases to which the scavengers produced by the process of the present invention are potentially usefully applied, may for example include nitrogen, hydrogen, helium, argon, neon, hydrocarbons, ammonia, silane, and germane. The hydrocarbons with which the scavengers of the present invention may be usefully employed include methane, ethane, ethylene, propylene, and the like.

The scavengers are particularly usefully employed in removing oxygen and water from inert gases employed in the fabrication of semiconductor devices, however, the broad utility of such scavengers is not thus limited, and the same may be employed in any inert gas purification application where highly efficient removal of Lewis acid and oxidant impurities is desired.

The scavengers comprise an inert inorganic support having a surface area in the range of from 30 to 1000 square meters per gram, and thermally stable up to at least 300°C.

As used in this context, the term "inert" means that the support is non-reactive to the Lewis acid and oxidant impurities which are reactively removed by the active scavenging species present on the support, and that the support is also non-reactive with the inert gases being purified by the scavenger.

Supports employed in scavengers produced by the process of the present invention are formed of materials characterized by thermal and chemical stability, as well as high porosity.

The stability criteria are important for maintaining the integrity of the scavenger during the pyrolysis phase of the scavenger preparation, and in the presence of the reagents employed to form the active scavenging species on the support, and the inert gas mixtures to be purified.

Specifically, the support materials are thermally stable up to at least 300°C, to accommodate the maximum temperatures encountered in synthesis and use of the scavenger, typically in the range of from about 200°C to about 300°C. The reagents which are suitably employed to form the active scavenging species on the support are characteristically strongly reducing and basis in nature.

High porosity of the support material is essential to the high capacity scavenger of the invention. For such high capacity scavengers, the support material has a surface area, as determined by standard nitrogen BET determination, of from 30 to 1000 square meters per gram.

Illustrative materials which may be potentially useful in the broad practice of the invention include materials such as aluminosilicates, alumina, silica, kieselguhr, and carbon, and mixtures, alloys, and composites thereof.

As used herein, the term "aluminosilicates" means a support composition including the elements aluminum, silicon, and oxygen, such as molecular sieves; such aluminosilicates may be natural or synthetic in character.

The supports useful in the scavengers thus include any suitable materials which are compatible with the inert gas mixtures being purified, and the reaction products of the impurity removal, and any intermediates involved in preparing the scavenger, and which are stable under the conditions of use.

The preferred characteristics of supports which are useful for scavengers produced by the process of the invention include (a) a surface area in the range of from 30 to 1000 square meters per gram of support, (b) high porosity, such as a significant porosity from pores of a diameter in the range of from about 3 to about 200 Angstroms, and (c) good thermal stability,i.e., thermally stable at temperatures up to at least 300 degrees Centigrade.

The scavengers may be readily formed into a bed through which the impurity-containing inert gas mixture is flowed for purification thereof, thereby providing a highly efficient removal system for substantially eliminating Lewis acid and oxidant impurities, such as water and oxygen impurities, from inert gases.

Suitable scavengers, utilizing metal and hydridic active scavenging species derived by pyrolysis of alkyl metal compounds of Group IA-IIIA metals on suitable supports, may variously provide water and/or oxygen removal capacity of from about 10 to about 30 liters of gaseous water and/or oxygen per liter of bed of the scavenger. In some instances where the impurity-removing reactions are highly exothermic in character, it may be desirable to utilize a lower removal capacity, e.g., of from about 5 to about 10 liters of gaseous water and/or oxygen per liter of bed of the scavenger.

The impurity removal capacity of the bed may of course be readily adjusted to a particular desired level by controlling the loading of the active scavenging species on the support in the impregnation or other fabrication step by which the organometallic precursor compound is applied to the support.

The single drawing hereof shows a schematic representation of an apparatus for carrying out the inert gas purification method of the invention.

The vessel 10 comprises an upper cylindrically shaped block 12 joined to the cup-like receptacle 14 by means of circumferentially extending weld 16. In the lower portion of receptacle 14 is disposed a bed 18 of the scavenger according to the present invention.

The vessel features means for introducing the impurity-containing gas mixture, comprising as a primary component one or more inert gases, into the interior space of the receptacle 14 for contact with the scavenger in bed 18. Such introduction means comprise the conduit 20, provided at its exterior end with an appropriate fitting 22 for joining with the supply line 32 to inert gas mixture source 30. The conduit 20 passes through the block 12 as shown, in a generally horizontal direction toward the center of the block and then downwardly extending from the block into the bed 18. At its lower portion in contact with the bed, this conduit has a plurality of gas distribution openings 34, through which the gas mixture flows outwardly and upwardly through the scavenger in the bed.

Above the bed in the receptacle 14, the impurity-depleted inert gas flows into the outlet conduit 24, provided with a suitable fitting 26 for connection to the product gas discharge line 28, from which the purified gas may be supplied to a downstream end-use processing facility.

In forming the scavengers, the inert support is allowed to react with an organometallic reagent, resulting in deposition on the support of an organometallic precursor of the active scavenging species. The organometallic precursor thus immobilized on the support is pyrolyzed in situ to yield a non-volatile pyrolysis product as the active scavenging species. The pyrolysis product generally comprises metal and/or metal hydride species, which must be capable of removing Lewis acid and/or oxidant impurities, e.g., water and/or oxygen, from an inert gas mixture containing such impurities, by converting the impurities to non-volatile species which do not leave the support bed, and which have low vapor pressure, so that the scavenger-contacted gas is substantially depleted in the impurity species.

The organometallic precursors which are employed to form the active scavenging species of the scavengers of the present invention, are alkyl metal compounds which on in situ pyrolysis yield active metals and/or hydride components on the inert support.

The alkyl metal compounds suitable for forming the active scavenging species of the scavenger comprise a metal moiety which is selected from one or more of Group IA, IIA, and IIIA metals. The metal constituents of the organometallic precursors may thus include lithium, sodium, potassium, magnesium, barium, calcium, and aluminum.

Alkyl metal compounds comprising metals of Groups IA, IIA, and/or IIIA are decomposable to yield metal hydrides and/or active metals at comparatively low temperatures by beta-hydride elimination. An example is the decomposition of dibutylmagnesium to form butene and magnesium hydride.

In the case of alkyl compounds of Group III metals such as aluminum, the pyrolysis of the alkyl substituents will yield aluminum trihydride (alane) and/or a highly dispersed aluminum metal phase. Both of these decomposition product species are active scavengers useful to remove water and oxygen in an inert gas stream.

A highly preferred active scavenging species is formed by pyrolysis of dibutylmagnesium, since this reaction yields two equivalents of scavenging compounds, an olefin (butene) and the dihydride of the metal. By contrast, only one equivalent of scavenging moiety is formed upon decomposition of the Group I metal alkyl compounds.

The preferred scavenging species, magnesium dihydride, has a very favorable reaction equilibrium for scavenging removal of water and oxygen. The equilibrium constant for the reaction of magnesium dihydride with water to form magnesium hydroxide and hydrogen is 10. Thus, there will be less than one part-per-billion (ppb) water in an inert gas stream that has been contacted and equilibrated with a scavenger comprising magnesium dihydride as the active scavenging species.

The reaction between oxygen and magnesium dihydride to form magnesium hydroxide has an equilibrium constant of 10⁴⁰, so that the concentration of oxygen in an inert gas stream that has been contacted and equilibrated with the scavenger will be less than 1 ppb.

Where, as in the case of dibutylmagnesium, the pyrolysis decomposition reaction yields a hydrocarbon, e.g., butene, it is necessary to eliminate the hydrocarbon by-product from the scavenger. Otherwise, contamination of the inert gas stream may occur in use of the scavenger, resulting from a spontaneous thermal beta-hydride process, or by a protonation of the alkyl metal complex which may release hydrocarbon into the gas stream, such as by the reaction: $\text{Bu₂Mg + 2H₂O → BuH + Mg(OH)₂.}$

As defined and discussed hereinearlier, inert gases do not significantly react with the scavenger. Such inert or non-reactive character can be quantified in terms of the pkₐ values of the gas species sought to be purified. Listed below in Table I are pkₐ values for illustrative gases.

**TABLE I**

| **pk**_{**a**} **Values for Selected Illustrative Compounds** | |
|---|---|
| **Compound** | **pk**_{**a**} |
| Butene | 42 |
| Methane | 40 |
| Hydrogen | 37 |
| Benzene | 37 |
| Ethylene | 36 |
| Propylene | 36 |
| Toluene | 35 |
| Phosphine | 28 |
| Arsine | 26 |
| Water | 15 |

For example, arsine will react with magnesium dihydride as the active scavenging species in accordance with the following reaction: $\text{AsH₃MgH₂ → HMgAsH₂ + H₂}$

For an illustrative scavenger comprising magnesium dihydride as the active scavenging species, ammonia will react with the scavenger, but only by physical adsorption and solvation effects. Accordingly, ammonia is inert to such scavenger, but arsine, reacting with the active scavenging species according to the above reaction, is a reactive, i.e., non-inert, gas.

Gases such as hydrogen, methane, and silane are likewise inert to the aforementioned illustrative scavenger comprising magnesium dihydride as the active scavenging species.

Among the various alkyl metal precursor compounds utilized to form the active scavenging species by pyrolysis, the preferred alkyl metal precursor compound for Group IA metals is butyllithium. The preferred alkyl metal precursor compound for Group IIA metals is dibutylmagnesium. The preferred alkyl metal precursor compounds for Group IIIA metals include trimethylaluminum, triethylaluminum, and/or diisobutylaluminum hydride.

As indicated, the scavengers produced by the process of the present invention are characterized by removal capacities for Lewis acid and oxidant impurities which may be substantially greater than those of scavengers heretofore employed in the art. For example the water scavenging capacities of the scavengers may be on the order of from about 20 to about 30 liters of gaseous water per liter of a bed of the scavenger. Oxygen scavenging capacities for scavengers according to the present invention may be on the order of from about 15 to about 30 liters of gaseous oxygen per liter of a bed of the scavenger. Alkyl metal compounds utilized as precursors to form the active scavenging species of scavengers of the invention, may suitably comprise as alkyl substituents C₁-C₁₂ alkyl, preferably C₁-C₈ alkyl, and most preferably C₁-C₄ alkyl.

The alkyl metal precursor compound may be deposited on the support in any suitable manner. Generally it has been found satisfactory to apply the organometallic precursor compound to the support from an organic solvent solution of the alkyl metal compound, followed by drying of the impregnated support, preferably at elevated temperature.

After the solvent has been driven off, the impregnated support may be subjected to elevated temperatures for pyrolysis of the alkyl metal compound. The specific elevated temperatures which may suitably be employed to carry out such pyrolysis may readily be determined by those skilled in the art via a few simple tests at varying temperatures, to determine temperature conditions appropriate to produce the desired active scavenger species from the particular alkyl metal compound being employed. In general, however, it is desirable to utilize a pyrolysis temperatures in the range of from about 150°C to about 210°C for Group I and Group II metal compounds, and temperatures of from about 15-°C to about 250°C for Group III metal compounds.

In like manner, the concentration of active scavenging species on the support, as effective to produce the desired purification of inert gases in a given end use application, may be readily determined by a few simple tests, without the necessity of undue experimentation. Generally, however, satisfactory results may be obtained by depositing on the support from about 1 to about 5 moles of the organometallic precursor per liter of support, to form a corresponding concentration of the active scavenging species on the support.

It will therefore be recognized that the specific concentration of active scavenging species which may be usefully employed on the scavenger of the present invention may be varied widely, depending on the type and concentration of the impurities in the inert gas stream to be purified, the intended service life of the scavenger, the volumetric flow rate of the inert gas mixture contacted with the specific scavenger, the flow regime of the gas stream contacted with the scavenger, the nature of the support, and the specific active scavenging species employed.

A basic requirement of the scavenger in the practice of the invention is that the vapor pressures of the scavenger and the reaction products of the impurity-scavenging reactions(s) be very low, preferably below about 1 ppm by volume, and most preferably below about 0.1 ppm by volume, to insure that the gas stream being purified is not contaminated by the scavenger or scavenging reaction products. This vapor pressure criterion is particularly important in the case of hydrocarbons, except of course in the case where gaseous hydrocarbons are the primary component of the inert gas mixture being purified.

The advantages of the present invention are further shown with respect to the following non-limiting examples, wherein all parts and percentages are by weight, unless otherwise expressly stated.

### EXAMPLE I

A 200 ml sample of A1₂O3 (Aldrich Chemical Co., Brockman Activity I neutral, 150 mesh) was dried at 350°C for 48 hours under a stream of N₂, and then cooled under a stream of N₂. Approximately 200 ml of a 1.6M solution of BuLi in hexane was added. The hexane was driven off from the material at 110°C under a stream of N₂. The resulting alkyl metal-bonded support was heated to 210°C for an additional 12 hours under a stream of N₂, to form a product solid having a pale yellow color.

### EXAMPLE II

A 1000 ml sample of A1₂0₃ (Aldrich Chemical Co., Brockman Activity I neutral, 150 mesh) was heated under a N₂ stream in a rounded bottom flask sealed with a rubber septum, and maintained at 350°C for 4 days, following which it was cooled under a stream of N₂. The sample then was transferred into a N₂ atmosphere glove box (VAC). A 400 ml aliquot of this material was placed in a Wheaton bottle equipped with a butyl rubber septum. 237g of 3 wt% Mg solution of Bu₂Mg in hexane was added to the A1₂0₃ support material, and the hexane was removed under a stream of N₂ at 100°C. After the removal of hexane was complete, the temperature of the material was raised to 210°C to effect the beta-hydride loss of butene.

The resultant pale yellow solid was cooled and transferred into a N₂ atmosphere glove box.

### EXAMPLE III

A 200 ml sample of dried A1₂0₃ (Aldrich Chemical Co., Brockman Activity I neutral, 150 mesh) was prepared for loading with an alkyl metal compound according to the procedure of Example II, and approximately 50 ml of a 1.6 M solution of BuLi in hexane was then added. The hexane was driven off from the material at 110°C under a stream of N₂. The material finally was heated to 210°C for an additional 12 hours under a stream of N₂ to form a pale yellow solid as the product.

### EXAMPLE IV

A 30 ml sample of the material from Example I was placed in a container equipped with a septum. 1000 ppm 0₂ was flowed through this bed of material at a flow rate was 50 ml per minute. The effluent gas was measured on a Delta F trace 0₂ analyzer. The effluent gas had no 0₂ therein (<50 ppb 0₂) until breakthrough, at which time the effluent 0₂ concentration rose sharply. The capacity of the scavenger bed was calculated from the amount of gas required to consume the bed and the volume of the bed of the scavenger material, as approximately 18 liters of 0₂ per liter of bed.

### EXAMPLE V

A 30 sample ml sample of the material from Example III was placed in a container equipped with a septum. 1000 ppm 0₂ was passed through this bed of material at a flow rate of 50 ml per minute. The effluent was measured on a Delta F trace 0₂ analyzer. The effluent had no 0₂ in the stream (<50 ppb 0₂) until breakthrough. The capacity of the bed was calculated from the amount of gas required to consume the bed and the volume of the bed of the scavenger material, as approximately 3.6 liters of 0₂ per liter of bed.

### EXAMPLE VI

A 30 ml sample of the material from Example II was placed in a container equipped with a septum. 1000 ppm 0₂ was passed through this bed of material at a flow rate of 50 ml per minute. The effluent was measured on a Delta F trace 0₂ analyzer. The effluent had no 0₂ (<50 ppb 0₂) in the stream until breakthrough, when the effluent 0₂ concentration rose sharply. The capacity of the bed was calculated from the amount of gas required to consume the bed and the volume of the bed of the scavenger material, as approximately 17 liters of 0₂ per liter of bed.

### EXAMPLE VII

A 30 ml sample of the material from Example I was placed in a tube equipped with a septum, and a stream of high purity helium was passed through the sample. The helium effluent stream was introduced into a gas chromatograph that was sensitive to 0.1 ppm C₄ hydrocarbons. No C₄ hydrocarbons were observed at a space velocity of 100 volumes of gas per volume of bed per hour.

### EXAMPLE VIII

A 30 ml sample of the material from Example II was placed in a tube equipped with a septum, and a stream of high purity helium was passed through the sample. The helium effluent stream was introduced into a gas chromatograph that was sensitive to 0.1 ppm C₄ hydrocarbons. No C₄ hydrocarbons were observed at a space velocity of 100 volumes of gas per volume of bed per hour.

### BEST MODE FOR CARRYING OUT THE INVENTION

In a preferred aspect, Lewis acid and oxidant scavengers useful for the purification of inert gas mixtures are formed by applying an organic solvent solution of alkyl metal compounds of Group IA-IIIA metals, followed by drying of the impregnated support at elevated temperature and pyrolysis of the alkyl metal compound to form the active scavenging species.

The support preferably is formed of a high surface area material, i.e., having from about 30 to about 1000 square meters of surface area per gram of support, and high porosity, such as having a significant porosity from pores of a diameter in the range of from about 3 to about 200 Angstroms, and which is thermally stable at temperatures up to about at least 300°C. Examples of such materials include alumina, aluminosilicates, silica, kieselguhr, and carbon. Preferred organometallic precursors of Group IA-IIIA metals suitable for forming the scavenger include lithium (in the case of Group IA), magnesium (in the case of Group IIA), and aluminum (in the case of Group IIIA) as the metal moiety of the alkyl metal precursors for the active scavenging species.

The pyrolysis preferably is a carried out at sufficient temperature and for sufficient time to yield a scavenger with a water and/or oxygen removal capacity of at least about 5, and preferably at least about 10, liters of gaseous water and/or oxygen per liter of bed of the scavenger. The scavenger preferably is provided in a gas purifier vessel of the type shown in the single drawing herein, through which impurity-containing gas mixture is flowed for contacting with the scavenger composition, to yield a substantially impurity-free effluent gas.

### INDUSTRIAL APPLICABILITY

The scavenger produced by the process of the present invention is usefully employed for purifying inert gases to remove Lewis acid and/or oxidant impurities, such as oxygen and/or water, in industrial applications such as the fabrication of semiconductor devices. In such applications, inert gases are frequently employed, and when impurities are present in any significant amounts therein, the impurities can render product semiconductor devices deficient or even useless for their intended purpose. As described hereinabove, the use of magnesium dihydride, a preferred scavenging species, produces a water-depleted effluent having less than one part-per-billion (ppb) water in an inert gas stream that has been contacted and equilibrated therewith. As shown by the Examples hereinabove, the scavenger compositions of the invention are capable of removing oxygen to less than 50 ppb in the effluent stream, and hydrocarbons to less than 0.1 parts-per-million (ppm).

While the invention has been described with reference to specific features and preferred embodiments thereof, it will be apparent that numerous variations, modifications, and embodiments are possible, and all such variations, modifications, and embodiments are therefore to be regarded as being within the scope of the invention as claimed.

## Claims

1. A process for producing a scavenger removing Lewis acid and oxidant impurities from inert gas mixtures, said scavenger having a water and oxygen removal capacity exceeding 5 liters of gaseous water and/or oxygen per liter of bed of the scavenger, said process comprising:
depositing an organometallic precursor on an inert inorganic support having a surface area, as determined by standard nitrogen BET determination, of from 30 to 1000 square meters per gram and thermal stability up to at least about 300 °C, and pyrolyzing the organometallic precursor at a selected elevated temperature on the support directly thereafter, thereby yielding an active scavenging species, said organometallic precursor selected from those of the group consisting of:
i) an organometal compound of the formula MR, wherein M is a metal from Group IA and R is alkyl and the selected elevated temperature is in the range of from 150 °C to 210 °C;
ii) an organometal compound of the formula M (R)₂ wherein M is a metal from Group IIA and R is alkyl and said elevated temperature is in the range of from 150 °C to 210 °C;
iii) an organometal compound of the formula M(R)₃ wherein M is a metal from Group IIIA and R is alkyl, and said selected temperature is in the range of from 150 °C to 250 °C.

2. A process according to claim 1, wherein said support is formed of a material selected from the group consisting of: alumina; silica; aluminosilicates; kieselguhr; carbon; and mixtures, alloys, and composites thereof.

3. A process according to claim 1, wherein said precursor is deposited on an alumina support.

4. A process according to claim 1, wherein said organometallic precursor is an alkyl metal compound comprising a metal selected from the group consisting of lithium, sodium, and potassium.

5. A process according to claim 1, wherein said organometallic precursor is an alkyl metal compound comprising a metal selected from the group consisting of magnesium, barium, calcium.

6. A process according to claim 1, wherein said organometallic precursor is an alkyl compound comprising aluminum as the metal constituent thereof.

7. A process according to claim 1, wherein said organometallic precursor is butyllithium.

8. A process according to claim 1, wherein said organometallic precursor is dibutylmagnesium.

9. A process according to claim 1, wherein said organometallic precursor is selected from the group consisting of trimethylaluminum, triethylaluminum, and diisobutylaluminum hydride.

10. A process for purifying an inert gas mixture by removing Lewis acid and oxidant impurities therefrom, comprising contacting said inert gas mixture with a scavenger having a water and/or oxygen removal capacity exceeding 5 liters of gaseous water and/or oxygen per liter of bed of the scavenger, said scavenger comprising:
a) an inert inorganic suport having a surface area, as determined by standard nitrogen BET determination, in the range of from 30 to 1000 square meters per gram, and thermally stable up to at least about 300 °C; and
b) an active scavenging species, present on said support at a concentration of from 1 mole to 5 moles per liter of support, and formed by deposition on the support of an organometallic precursor and directly thereafter pyrolysis thereof at a selected elevated temperature on said support, said organometallic precursor and said elevated temperature being selected from those of the group consisting of:
i) said organometallic precursor being an organometal compound of the formula MR, wherein M is a metal from Group IA and R is alkyl, and said selected elevated temperature being in the range of from 150 °C to 210 °C;
ii) said organometallic precursor being an organometal compound of the formula M(R)₂ wherein M is a metal from Group IIA and R is alkyl, and said selected elevated temperature being in the range of from 150 °C to 210 °C; and
iii) said organometallic precursor being an organometal compound of the formula M(R)₃, wherein M is a metal from Group IIIA and R is alkyl, and said selected elevated temperature being in the range of from 150 °C to 250 °C.

11. A process according to claim 10, wherein said inert gas mixture comprises (i) a primary component selected from the group consisting of nitrogen, hydrogen, helium, argon, neon, hydrocarbons, ammonia, silane, and germane, and (ii) an impurity selected from the group consisting of Lewis acids, oxidants, and mixtures thereof.

12. A process according to claim 10, wherein said inert gas mixture comprises a primary component selected from the group consisting of aliphatic hydrocarbons, olefins, and mixtures thereof.

13. An apparatus for purifying an inert gas by removing Lewis acid and oxidant impurities therefrom, comprising:
a) a vessel (10) containing a bed (18) of a scavenger having a water and oxygen removal capacity exceeding 5 liters of gaseous water and/or oxygen per liter of bed of the scavenger, said scavenger comprising:
i) an inert inorganic support having a surface area, as determined by standard nitrogen BET determination, in the range of from 30 to 1000 square meters per gram, and thermally stable up to at least about 300 °C; and
ii) an active scavenging species, present on said support at a concentration of from 1 mole to 5 moles per liter of support, and formed by deposition on the support of an organometallic precursor and directly thereafter pyrolysis thereof at a selected elevated temperature on said support, said organometallic precursor and said selected elevated temperature being selected from those of the group consisting of:
A) said organometallic precursor being an organometal compound of the formula MR, wherein M is a metal from Group IA and R is alkyl, and said selected elevated temperature being in the range of from 150 °C to 210 °C;
B) said organometallic precursor being an organometal compound of the formula M(R)₂, wherein M is a metal from Group IIA and R is alkyl, and said selected elevated temperature being in the range of from 150 °C to 210 °C; and
C) said organometallic precursor being an organometal compound of the formula M(R)₃, wherein M is a metal from Group IIIA and R is alkyl, and said selected elevated temperature being in the range of from 150 °C to 250 °C.
b) means (20,22,30,22) for introducing impurity-containing inert gas to said vessel; and
c) means (24,26,28) for discharging impurity-depleted inert gas from said vessel.

14. An apparatus according to claim 13, wherein said support is formed of a material selected from the group consisting of: alumina; silica; aluminosilicates; kieselguhr; carbon; and mixtures, alloys, and composites thereof.

15. An apparatus according to claim 13, wherein said bed of scavenger has an impurity removal capacity of from 15 to 30 liters of oxygen per liter of said bed.

16. An apparatus according to claim 13, wherein said bed of scavenger has an impurity removal capacity of from 20 to 30 liters of gaseous water per liter of said bed.

17. An apparatus according to claim 13, wherein said organometallic precursor is selected from the group consisting of butyllithium, dibutylmagnesium, trimethylaluminum, triehtylaluminum, and diisobutylaluminum hydride.

## Patentansprüche

1. Verfahren zum Herstellen eines Auffängers, welcher Lewis-Säure und/oder Oxidationsmittel aufweisende Verunreinigungen aus inerten Gasgemischen beseitigt, wobei der Auffänger eine Kapazität zum Beseitigen von Wasser und Sauerstoff hat, die 5 Liter an gasförmigem Wasser und/oder Sauerstoffpro Liter Auffängerbett übersteigt, wobei ein metallhaltige organische Vorstufe auf einem inerten anorganischen Träger abgeschieden wird, die eine mittels einer üblichen Stickstoff-BET-Bestimmung gemessene Oberfläche von 30 bis 1000 Quadratmetern pro Gramm aufweist und bis mindestens etwa 300 °C thermisch stabil ist, und direkt danach die metallhaltige organische Vorstufe bei einer gewählten erhöhten Temperatur auf dem Träger pyrolysiert wird, wodurch sich eine aktive Auffängergattung ergibt, wobei die metallhaltige organische Vorstufe aus der folgenden Gruppe ausgewählt ist:
i) einer metallhaltigen organischen Verbindung der Formel MR, in welcher M ein Metall der Gruppe IA und R Alkyl ist, wobei die besagte erhöhte Temperatur im Bereich von 150 °C bis 210 °C liegt;
ii) einer metallhaltigen organischen Verbindung der Formel M (R)₂, in welcher M ein Metall der Gruppe IIA und R Alkyl ist, wobei die besagte erhöhte Temperatur im Bereich von 150 °C bis 210 °C liegt;
iii) einer metallhaltigen organischen Verbindung der Formel M (R)₃, in welcher M ein Metall der Gruppe IIIA und R Alkyl ist, wobei die besagte erhöhte Temperatur im Bereich von 150 °C bis 250 °C liegt.

2. Verfahren nach Anspruch 1, bei welchem der Träger aus einem Werkstoff gebildet wird, der aus der aus Aluminiumoxid, Siliciumoxid, Alumosilikaten, Kieselgur, Kohlenstoff und Mischungen, Legierungen und Verbundstoffen derselben bestehenden Gruppe ausgewählt ist.

3. Verfahren nach Anspruch 1, bei welchem die besagte Vorstufe auf einen Aluminiumträger abgeschieden wird.

4. Verfahren nach Anspruch 1, bei welchem die metallhaltige organische Vorstufe eine Alkylmetallverbindung ist, die ein aus der aus Lithium, Natrium und Kalium bestehenden Gruppe ausgewähltes Metall aufweist.

5. Verfahren nach Anspruch 1, bei welchem die metallhaltige organische Vorstufe eine Alkylmetallverbindung ist, die ein aus der aus Magnesium, Barium und Kalzium bestehenden Gruppe ausgewähltes Metall aufweist.

6. Verfahren nach Anspruch 1, bei welchem die metallhaltige organische Vorstufe eine Alkylmetallverbindung ist, die Aluminium als deren Metallbestandteil aufweist.

7. Verfahren nach Anspruch 1, bei welchem die metallhaltige organische Vorstufe ButylLithium ist.

8. Verfahren nach Anspruch 1, bei welchem die metallhaltige organische Vorstufe Dibutyl-Magnesium ist.

9. Verfahren nach Anspruch 1, bei welchem die metallhaltige organische Vorstufe aus der aus Trimethylaluminium, Triethylaluminium und Diisobutylaluminiumhydrid bestehenden Gruppe ausgewählt ist.

10. Verfahren zum Reinigen eines inerten Gasgemisches durch Beseitigen von Lewis-Säure und/oder Oxidationsmittel aufweisenden Verunreinigungen, wobei das inerte Gasgemisch mit einem Auffänger in Kontakt gebracht wird, der eine Kapazität zum Beseitigen von Wasser und/oder Sauerstoff hat, die 5 Liter an gasförmigem Wasser und/oder Sauerstoff pro Liter Auffängerbett übersteigt, wobei der Auffänger
a) einen inerten anorganischen Träger, dessen mittels einer üblichen Stickstoff-BET-Bestimmung gemessene Oberfläche zwischen 30 bis 1000 Quadratmetern pro Gramm liegt und der bis mindestens etwa 300 °C thermisch stabil ist; und
b) eine aktive Auffängergattung aufweist, die in einer Konzentration von 1 Mol bis 5 Molen pro Liter Träger vorliegt und mittels Abscheidung einer metallhaltigen organischen Vorstufe auf den Träger und direkt anschließender Pyrolyse davon bei einer gewählten erhöhten Temperatur auf dem Träger ausgebildet wurde, wobei die metallhaltige organische Vorstufe und die besagte gewählte erhöhte Temperatur aus der folgenden Gruppe ausgewählt sind:
i) die besagte metallhaltige organische Vorstufe ist eine metallhaltige organische Verbindung der Formel MR, in welcher M ein Metall der Gruppe IA und R Alkyl ist, und die besagte erhöhte Temperatur liegt im Bereich von 150 °C bis 210 °C;
ii) die besagte metallhaltige organische Vorstufe ist eine metallhaltige organische Verbindung der Formel M (R)₂, in welcher M ein Metall der Gruppe IIA und R Alkyl ist, und die besagte erhöhte Temperatur liegt im Bereich von 150 °C bis 210 °C;
iii) die besagte metallhaltige organische Vorstufe ist eine metallhaltige organische Verbindung der Formel M (R)₃, in welcher M ein Metall der Gruppe IIIA und R Alkyl ist, und die besagte erhöhte Temperatur liegt im Bereich von 150 °C bis 250 °C.

11. Verfahren nach Anspruch 10, bei welchem das besagte inerte Gasgemisch (i) eine Primärkomponente, die aus der aus Stickstoff, Wasserstoff, Helium, Argon, Neon, Kohlenwasserstoffen, Ammoniak, Silan und German bestehenden Gruppe ausgewählt ist, und (ii) eine Verunreinigung aufweist, die aus der aus Lewis-Säuren, Oxidationsmitteln und Gemischen derselben bestehenden Gruppe ausgewählt ist.

12. Verfahren nach Anspruch 10, bei welchem das besagte inerte Gasgemisch eine Primärkomponente aufweist, die aus der aus alipathischen Kohlenwasserstoffen, Olefinen und Gemischen derselben bestehenden Gruppe ausgewählt ist.

13. Vorrichtung zum Reinigen eines inerten Gases mittels Entfernen von Verunreinigungen aus Lewis-Säure und Oxidationsmittel mit:
a) einem Behälter (10), der ein Bett (18) eines Auffängers enthält, welcher eine Kapazität zum Beseitigen von Wasser und Sauerstoff hat, die 5 Liter an gasförmigem Wasser und/oder Sauerstoff pro Liter Auffängerbett übersteigt, wobei der Auffänger
i) einen inerten anorganischen Träger, dessen mittels einer üblichen Stickstoff-BET-Bestimmung gemessene Oberfläche zwischen 30 bis 1000 Quadratmetern pro Gramm liegt und der bis mindestens etwa 300 °C thermisch stabil ist; und
ii) eine aktive Auffängergattung aufweist, die in einer Konzentration von 1 Mol bis 5 Molen pro Liter Träger vorliegt und mittels Abscheidung einer metallhaltigen organischen Vorstufe auf dem Träger und direkt anschließender Pyrolyse davon bei einer gewählten erhöhten Temperatur auf dem Träger ausgebildet wurde, wobei die metallhaltige organische Vorstufe und die besagte gewählte erhöhte Temperatur aus der folgenden Gruppe ausgewählt sind:
A) die besagte metallhaltige organische Vorstufe ist eine metallhaltige organische Verbindung der Formel MR, in welcher M ein Metall der Gruppe IA und R Alkyl ist, und die besagte erhöhte Temperatur liegt im Bereich von 150 °C bis 210 °C;
B) die besagte metallhaltige organische Vorstufe ist eine metallhaltige organische Verbindung der Formel M (R)₂, in welcher M ein Metall der Gruppe IIA und R Alkyl ist, und die besagte erhöhte Temperatur liegt im Bereich von 150 °C bis 210 °C;
C) die besagte metallhaltige organische Vorstufe ist eine metallhaltige organische Verbindung der Formel M (R)₃, in welcher M ein Metall der Gruppe IIIA und R Alkyl ist, und die besagte erhöhte Temperatur liegt im Bereich von 150 °C bis 250 °C;
b) einer Anordnung (20, 22, 30, 32) zum Einleiten von Verunreinigungen enthaltendem inerten Gas in den Behälter; und
c) einer Anordnung (24, 26, 28) zur Abgabe von an Verunreinigungen verarmtem inerten Gas aus dem Behälter.

14. Vorrichtung nach Anspruch 13, bei welcher der Träger aus einem Werkstoff gebildet wird, das aus der aus Aluminiumoxid, Siliciumoxid, Alumosilikaten, Kieselgur, Kohlenstoff und Mischungen, Legierungen und Verbundstoffen derselben bestehenden Gruppe ausgewählt ist.

15. Vorrichtung nach Anspruch 13, bei welcher das Bett des Auffängers eine Kapazität zum Beseitigen von Verunreinigungen von 15 bis 30 Litern Sauerstoff pro Liter Bett hat.

16. Vorrichtung nach Anspruch 13, bei welcher das Bett des Auffängers eine Kapazität zum Beseitigen von Verunreinigungen von 20 bis 30 Litern gasförmigem Wasser pro Liter Bett hat.

17. Vorrichtung nach Anspruch 13, bei welcher die metallhaltige organische Vorstufe aus der aus Butyllithium, Dibutylmagnesium, Trimethylaluminium, Triethylaluminium und Diisobutylaluminiumhydrid bestehenden Gruppe ausgewählt ist.

## Revendications

1. Procédé de production d'un accepteur éliminant les impuretés consistant en acides de Lewis et oxydants de mélanges de gaz inertes, ledit accepteur ayant une capacité d'élimination de l'eau et de l'oxygène excédant 5 litres d'eau à l'état gazeux et/ou d'oxygène par litre de lit de l'accepteur, ledit procédé comprenant :
le dépôt d'un précurseur organométallique sur un support inorganique inerte ayant une surface spécifique, déterminée par la détermination BET classique par adsorption d'azote, de 30 à 1000 m/g et une stabilité thermique jusqu'à une température d'au moins environ 300°C, et ensuite la pyrolyse directe du précurseur organométallique à une température élevée choisie sur le support, ce qui permet d'obtenir une entité à activité d'accepteur, ledit précurseur organométallique étant choisi entre ceux du groupe consistant en :
i) un composé organométallique de formule MR, dans laquelle M représente un métal du Groupe IA et R représente un groupe alkyle, la température élevée choisie étant comprise dans l'intervalle de 150°C à 210°C ;
ii) un composé organométallique de formule M(R)₂, dans laquelle M représente un métal du Groupe IIA et R représente un groupe alkyle, ladite température élevée étant comprise dans l'intervalle de 150°C à 210°C ;
ii) un composé organométallique de formule M(R)₃, dans laquelle M représente un métal du Groupe IIIA et R représente un groupe alkyle, ladite température choisie étant comprise dans l'intervalle de 150°C à 250°C.

2. Procédé suivant la revendication 1, dans lequel le support est formé d'une matière choisie dans le groupe consistant en : l'alumine , la silice ; des aluminosilicates ; le kieselguhr ; le carbone , ainsi que leurs mélanges, alliages et composites.

3. Procédé suivant la revendication 1, dans lequel le précurseur est déposé sur un support consistant en alumine.

4. Procédé suivant la revendication 1, dans lequel le précurseur organométallique est un composé alkylmétallique comprenant un métal choisi dans le groupe consistant en lithium, sodium et potassium.

5. Procédé suivant la revendication 1, dans lequel le précurseur organométallique est un composé alkylmétallique comprenant un métal choisi dans le groupe consistant en magnésium, baryum et calcium.

6. Procédé suivant la revendication 1, dans lequel le précurseur organométallique est un compozé alkylique comprenant l'aluminium comme métal constitutif.

7. Procédé suivant la revendication 1, dans lequel le précurseur organométallique est le butyl-lithium.

8. Procédé suivant la revendication 1, dans lequel le précurseur organométallique est le dibutylmagnésium.

9. Procédé suivant la revendication 1, dans lequel le précurseur organométallique est choisi dans le groupe consistant en triméthylaluminium, triéthylaluminium et hydrure de diisobutylaluminium.

10. Procédé pour purifier un mélange de gaz inerte en éliminant de ce mélange les impuretés consistant en acides de Lewis et oxydants, comprenant la mise en contact du mélange de gaz inertes avec un accepteur ayant une capacité d'élimination d'eau et/ou d'oxygène excédant 5 litres d'eau à l'état gazeux et/ou d'oxygène par litre de lit de l'accepteur, ledit accepteur comprenant :
a) un support inorganique inerte ayant une surface spécifique, déterminée par une détermination BET classique par adsorption d'azote, de 30 à 1000 m/g et une stabilité thermique jusqu'à une température d'au moins environ 300°C, et
b) une entité à activité d'accepteur, présente sur ledit support à une concentration de 1 mole à 5 moles par litre de support, et formée par dépôt sur le support d'un précurseur organométallique et, directement après, pyrolyse de ce précurseur à une température élevée choisie sur ledit support, ledit précurseur organométallique et ladite température élevée étant choisis parmi ceux du groupe consistant en :
i) un précurseur organométallique consistant en un composé organométallique de formule MR, dans laquelle M représente un métal du Groupe IA et R représente un groupe alkyle, et une température élevée choisie comprise dans l'intervalle de 150°c à 210°C ;
ii) un précurseur organométallique consistant en un composé organométallique de formule M(R)₂, dans laquelle M représente un métal du Groupe IIA et R représente un groupe alkyle, et une température élevée comprise dans l'intervalle de 150°C à 210°C ; et
iii) un précurseur organométallique consistant en un composé organométallique de formule M(R)₃, dans laquelle M représente un métal du Groupe IIIA et R représente un groupe alkyle, et une température élevée choisie comprise dans l'intervalle de 150°C à 250°C.

11. Procédé suivant la revendication 10, dans lequel le mélange de gaz inertes comprend (i) un constituant principal choisi dans le groupe consistant en azotes hydrogène, hélium, argon, néon, hydrocarbures, ammoniac, silane et germane, et (ii) une impureté choisi dans le groupe consistant en acides de Lewis, oxydants et leurs mélanges.

12. Procédé suivant la revendication 10, dans lequel le mélange de gaz inertes comprend un constituant principal choisi dans le groupe consistant en hydrocarbures aliphatiques, oléfines et leurs mélanges.

13. Appareil pour purifier un gaz inerte en éliminant de ce gaz les impuretés consistant en acides de Lewis et oxydants, comprenant :
a) un récipient (10) contenant un lit (18) d'accepteur ayant une capacité d'élimination d'eau et d'oxygéne excédant 5 litres d'eau à l'état gazeux et/ou d'oxygène par litre de lit de l'accepteur, ledit acceptent comprenant :
i) un support inorganique inerte ayant une surface spécifique, déterminée par une détermination BBT classique par adsorption d'azote, de 30 à 1000 m/g, et une stabilité thermique jusqu'à une température d'au moins environ 300°C ; et
ii) une entité à activité d'accepteur, présente sur ledit support à une concentration de 1 mole à 5 moles par litre de support, et formée par dépôt sur le support d'un précurseur organométallique et, directement après, pyrolyse de ce précurseur à une température élevée choisie sur ledit support, ledit précurseur organométallique et ladite température élevée étant choisis parmi ceux du groupe consistant en :
A) un précurseur organométallique consistant en un composé organométallique de formule MR, dans laquelle M représente un métal du Groupe IA et R représente un groupe alkyle, et une température élevée choisie comprise dans l'intervalle de 150°C à 210°C ;
B) un précurseur organométallique consistant en un composé organométallique de formule M(R)₂, dans laquelle M représente un métal du Groupe IIA et R représente un groupe alkyle, et une température élevée choisie comprise dans l'intervalle de 150°C à 210°C , et
C) un précurseur organométallique consistant en un composé organométallique de formule M(R)₃, dans laquelle M représente un métal du Groupe IIIA et R représente un groupe alkyle, et une température élevée choisie comprise dans l'intervalle de 150°C à 250°C.
b) des moyens (20, 22, 30, 32) pour l'introduction d'un gaz inerte contenant des impuretés dans ledit récipient ; et
c) des moyens (24, 26, 28) pour décharger dudit récipient le gaz inerte débarrassé des impuretés.

14. Appareil suivant la revendication 13, dans lequel le support est formé d'une matière choisie dans le groupe consistant en : alumine ; silice ; aluminosilicates ; kieselguhr ; carbone ; ainsi que leurs mélanges, alliages et composites.

15. Appareil suivant la revendication 13, dans lequel le lit d'accepteur a une capacité d'élimination d'impuretés de 15 à 30 litres d'oxygéne par litre dudit lit.

16. Appareil suivant la revendication 13, dans lequel le lit d'accepteur a une capacité d'élimination d'impuretés de 20 à 30 litres d'eau à l'état gazeux par litre dudit lit.

17. Appareil suivant la revendication 13, dans lequel le précurseur organométallique est choisi dans le groupe consistant en butyl-lithium, ditutyltmagnésium, triméthylaluminium, triéthylaluminium et hydrure de diisobutylaluminium.
